# FASCICULE DE BREVET EUROPEEN

(11) **EP 3 019 779 B1**
(45) Date de publication et mention de la délivrance du brevet: **07.09.2022**
(21) Numéro de dépôt: 14750561.4
(22) Date de dépôt: 07.07.2014
(51) Int. Cl.: C25B 9/00, F16J 15/12, C25B 9/77, C25B 9/75, C25B 1/04, C25B 9/05

(54) **JOINT POUR PILE D'ÉLECTROLYSEUR ET PILE D'ÉLECTROLYSEUR ÉQUIPÉE D'UN TEL JOINT**
DICHTUNG FÜR EINEN ELEKTROLYSEURZELLE UND ZELLE MIT SOLCH EINER DICHTUNG
SEAL FOR AN ELECTROLYSER CELL AND ELECTROLYSER CELL PROVIDED WITH SUCH A SEAL

(30) Priorité: 11.07.2013 FR 1356828
(43) Date de publication de la demande: 18.05.2016
(73) Titulaire: Elogen, 91940 Les Ulis (FR)
(72) Inventeur: DOUCET, Guillaume, F-91460 Marcoussis (FR); LARIDANT, François, F-92340 Bourg La Reine (FR); GERNOT, Eric, F-91310 Montlhery (FR)
(74) Mandataire: Palacci, Jeremie
(86) Numéro de dépôt international: PCT/FR2014/051745
(87) Numéro de publication internationale: WO 2015/004378

(56) Documents cités:
- WO-A1-2012/040253
- JP-A- 2004 319 461
- US-A- 4 721 555
- US-A- 5 565 072
- US-A1- 2009 255 826
- US-A1- 2013 157 173
- US-B2- 8 084 165

## Description

L'invention concerne la production industrielle d'hydrogène et les dispositifs électrolyseurs utilisés individuellement pour ce type de production et en particulier les électrolyseurs à électrolyte solide.

Pour produire industriellement de l'hydrogène, on met généralement en œuvre des processus à base de combustible fossile tels le reformage. Les processus de ce type présentent des coûts de fonctionnement faibles. Ils sont cependant polluants.

L'hydrogène est également produit industriellement de manière décentralisée par électrolyse de l'eau quand la production par reformage et/ou la livraison sur site ne sont pas ou peu adaptés. De plus, ce procédé n'est pas ou peu polluant. Les dispositifs électrolyseurs industriels actuels comprennent une pluralité de cellules électrochimiques, alimentées en eau, et comprenant chacune une paire d'électrodes.

Pour des raisons de coût et d'encombrement notamment, les cellules sont généralement plates et regroupées en un ou plusieurs empilements, ou "stack" en anglais, de manière que deux cellules superposées présentent à chaque fois une électrode commune. Pour diminuer les coûts, liés notamment à la fabrication et au fonctionnement des empilements, on cherche d'une manière générale à maximiser le nombre de cellules par empilement. Les empilements à électrolyte solide actuels comprennent au maximum une vingtaine de cellules.

En appliquant un courant continu entre l'anode et la cathode de chaque cellule, au moyen d'un générateur dont la tension de sortie peut être réglable, on provoque la réaction d'électrolyse de l'eau. Du dihydrogène (H₂) et du dioxygène (O₂) sont ainsi produits.

L'eau peut être introduite dans les cellules à basse pression (proche de la pression atmosphérique) ou sous pression en fonction de la pression de dihydrogène (H₂) souhaitée en sortie. Des pressions de l'ordre de 6 ou 7 bars sont généralement utilisées.

Pour que les joints d'étanchéité qui équipent chaque cellule puissent résister à de telles pressions de fonctionnement, il est nécessaire de maintenir les cellules serrées les unes contre les autres, suivant la direction de l'empilement. La force de serrage à appliquer à un empilement dépend du nombre de cellules dans l'empilement et de la pression des fluides à l'intérieur des cellules. Les joints d'étanchéité actuellement utilisés finissent par dysfonctionner lorsqu'on utilise des forces de serrage importantes.

L'étanchéité des systèmes actuels est réalisée au moyen d'un nombre important de pièces distinctes prévues pour coopérer les unes avec les autres, avec un assemblage complexe. Par exemple, le document JP 2004 319461 décrit une cellule comprenant un joint, le joint comprenant une âme rigide, éventuellement métallique, entourée d'une enveloppe à base d'élastomère dont les nervures entourent les ouvertures et les bords internes sur chaque face de l'âme.

Les risques d'erreurs lors de cet assemblage sont élevés et les dysfonctionnements qui en résultent empêchent tout fonctionnement fiable.

Dit autrement, il n'existe pas à ce jour de joints d'étanchéité qui permettent à la fois d'empiler un grand nombre de cellules et d'utiliser des pressions en eau élevées.

Il en résulte que les dispositifs électrolyseurs actuels présentent de manière générale des performances industrielles nettement inférieures aux dispositifs utilisés dans la production à partir de combustible fossile.

L'invention vient améliorer la situation.

La demanderesse propose une cellule électrochimique comprenant deux joints pour une pile d'électrolyseur, chaque joint comprenant :
- une âme généralement annulaire, présentant deux faces mutuellement opposées selon une direction d'épaisseur et au moins deux ouvertures traversantes dans la direction d'épaisseur qui sont sensiblement opposées diamétralement l'une par rapport à l'autre, et
- une enveloppe recouvrant au moins en partie les deux faces en laissant les deux ouvertures au moins partiellement libres.

L'enveloppe présente au moins une première nervure s'étendant sur une première des deux faces selon un contour enfermant un bord interne de l'âme et les deux ouvertures de manière à permettre la circulation d'un fluide entre les deux faces selon la direction d'épaisseur.

Les deux joints sont mutuellement disposés de manière que la seconde des deux faces des deux joints soient en vis-à-vis.

Chaque joint présente une tenue mécanique améliorée et une résistance accrue aux fuites dans des empilements de grandes tailles sous pression élevée.

La demanderesse a constaté que des empilements comprenant de tels joints résistaient aux phénomènes de flambement qui auraient pu apparaître avec les piles de grande taille. La longueur des empilements peut donc être encore augmentée tout en présentant un flambement faible ce qui réduit encore les risques de dégradation et de fuite des piles.

Les phénomènes de fluage sont aussi particulièrement réduits par l'utilisation de tels joints. Il est alors possible d'augmenter encore les forces de serrage, les pressions de fonctionnement et donc le rendement des piles d'électrolyseurs.

Les piles d'électrolyseurs comprenant de tels joints forment alors des dispositifs de production d'hydrogène écologiquement acceptables. Ces dispositifs sont en outre industriellement fiables et rentables. De tels joints sont peu coûteux à la fabrication et faciles à assembler.

Ces joints restent efficaces en des conditions de fonctionnement critiques telles qu'une température et/ou une hygrométrie élevées, ainsi qu'en coopération avec des pièces de piles présentant des tolérances dimensionnelles importantes.

La cellule électrochimique peut en outre présenter les caractéristiques suivantes, combinées entre elles ou non :
- L'enveloppe présente une configuration et une composition adaptées de manière à isoler électriquement deux organes respectivement en contact avec l'une et l'autre des deux faces. Dans la pile d'électrolyseur, le joint à l'état installé assure donc une fonction d'isolation électrique en plus de sa fonction d'étanchéité.
- L'âme présente une composition métallique et l'enveloppe présente une composition à base d'élastomère. L'élastomère présente une déformabilité supérieure à celle du métal. L'âme rigidifie le joint et améliore sa tenue mécanique tandis que l'élastomère se déforme par contact et améliore l'étanchéité.
- L'enveloppe présente une composition comprenant de l'éthylène-propylène-diène monomère (EPDM). L'EPDM conserve en outre ses propriétés mécaniques et d'étanchéité sous des conditions de fonctionnement sévères tout en présentant un coût limité. La durée de vie du joint sous contrainte est alors améliorée.
- L'enveloppe présente en outre au moins une seconde nervure faisant saillie de la première face et s'étendant entre la première nervure et un bord externe de l'âme. La combinaison des deux nervures confère au joint deux zones de contact distinctes à l'état assemblé. La position du joint dans un empilement est alors stable et durable. La seconde nervure forme aussi une barrière supplémentaire d'étanchéité.
- La seconde nervure précitée s'étend selon un contour ouvert entourant partiellement la première nervure. Ainsi l'équilibrage des pressions entre l'espace inter-nervures et l'extérieur du joint est facilité. Les phénomènes de coussins d'air ou de ventouse sont évités. En outre, la seconde nervure forme un guide pour collecter d'éventuels fluides qui se seraient échappés de l'intérieur de la pile.
- L'âme comprend en outre deux ouvertures supplémentaires traversantes dans la direction d'épaisseur et sensiblement opposées diamétralement l'une par rapport à l'autre. L'enveloppe laisse les deux ouvertures supplémentaires au moins partiellement libres. L'enveloppe présente en outre deux nervures supplémentaires s'étendant sur la première face selon un contour enfermant chacune des deux ouvertures supplémentaires respectivement. À l'état assemblé du joint dans un empilement avec d'autres joints correspondant, lesdites ouvertures supplémentaires forment alors des portions de deux passages s'étendant sensiblement dans la direction de l'empilement. Les deux passages sont étanches par rapport au reste du joint. Les passages de fluide pour l'alimentation de l'empilement sont alors logés dans les joints.
- L'une des deux ouvertures et l'une des deux ouvertures supplémentaires précitées sont proches l'une de l'autre. Dans un état assemblé du joint dans un empilement, les passages de fluides selon la direction d'empilement sont alors regroupés circonférentiellement. L'alimentation de l'empilement est facilitée et l'encombrement de la pile peut être réduit. L'évacuation du gaz ou de l'eau chargée en gaz peut être facilitée en orientant la pile de manière que les passages formant sorties soient situées en des positions hautes par rapport au reste de la pile.
- Au moins une nervure présente une section transversale asymétrique de manière qu'un écrasement de ladite nervure selon la direction d'épaisseur génère une déformation asymétrique de ladite nervure. À l'état comprimé, la dilatation de la nervure n'entrave pas le bon fonctionnement de l'électrolyse.
- Au moins une nervure présente une section transversale asymétrique de manière qu'un écrasement de ladite nervure selon la direction d'épaisseur génère une déformation asymétrique de ladite nervure. À l'état comprimé, la dilatation de la nervure n'entrave pas le bon fonctionnement de l'électrolyse.
- La section asymétrique précitée présente une forme généralement trapézoïdale. Dans ce cas l'un des côtés se déforme en un bourrelet d'étanchéité et de calage tandis que le côté opposé vient s'appuyer sur la pièce adjacente au joint au cours de la compression en améliorant l'étanchéité.
- L'enveloppe présente une nervure s'étendant sur la face opposée à celle portant la première nervure et selon un contour enfermant le bord interne. Ladite nervure est conformée de manière à se déformer essentiellement dans la direction d'épaisseur en réponse à un écrasement selon la direction d'épaisseur.
- Un bord externe de l'âme présente au moins une zone de butée propre à coopérer avec un guide d'une pile d'électrolyseur pour caler le joint dans ladite pile d'électrolyseur selon une direction perpendiculaire à la direction d'empilement. Le calage et le maintien du joint dans l'empilement est facilité. Les phénomènes de flambement et les approximations de montage sont limités.

Selon un autre aspect, la demanderesse propose une pile d'électrolyseur comprenant un empilement de cellules électrochimiques telles que défini ci-dessus. L'empilement d'une telle pile peut optionnellement présenter 100, 150, 200 ou même 300 cellules électrochimiques au moins.

Les similitudes entre deux joints d'une même cellule permet de réduire les coûts de fabrication et facilite la maintenance de la pile. Les risques d'erreur de montage sont réduits. Une telle pile présente une bonne efficacité et un encombrement faible.

D'autres caractéristiques, détails et avantages de l'invention apparaîtront à la lecture de la description détaillée ci-après, et des dessins annexés, sur lesquels :
- la figure 1 est une représentation schématique de cellules d'électrolyse de l'eau au sein d'une pile,
- la figure 2 est une représentation schématique du fonctionnement d'une cellule d'électrolyse selon l'invention,
- la figure 3 est une vue éclatée en perspective d'une cellule d'électrolyse selon l'invention.
- la figure 4 est une vue en perspective d'une partie d'un joint selon l'invention,
- la figure 5 est une vue de dessus de la partie représentée en figure 4,
- la figure 6 est une vue de dessus d'un joint selon l'invention,
- la figure 7 est une vue du détail VII de la figure 6,
- la figure 8 est une vue en coupe selon le plan VIII de la figure 7,
- la figure 9 est une vue en coupe selon le plan IX de la figure 7,
- la figure 10 est une vue de dessous du joint de la figure 6,
- la figure 11 est une vue du détail XI de la figure 10,
- la figure 12 est une vue en coupe selon le plan XII de la figure 6, et
- les figures 13 et 14 sont des vues de détail d'une coupe d'une cellule selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

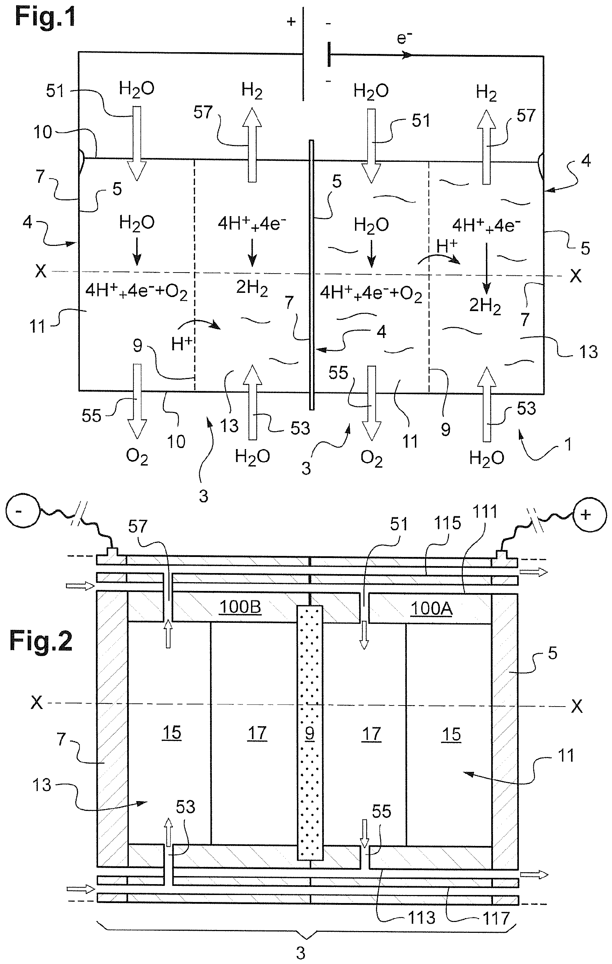

On fait référence à la figure 1.

Une pile d'électrolyseur 1 comprend une pluralité de cellules 3 d'électrolyse de l'eau empilées les unes sur les autres selon une première direction, ou direction d'empilement XX. Seules deux cellules 3 sont montrées sur la figure 1.

Chaque cellule 3 comprend deux électrodes, une membrane d'échange protonique 9 (ou membrane PEM pour "proton exchange membrane" en anglais) et une ou plusieurs parois externes 10.

Les deux électrodes sont chacune portée par une plaque bipolaire 4. Une plaque bipolaire 4 comprend deux faces opposées l'une par rapport à l'autre. Une première face forme une anode 5 d'une première cellule 3, tandis qu'une seconde face forme une cathode 7 d'une seconde cellule adjacente à la première cellule. Une plaque bipolaire 4 est disposée à l'interface de deux cellules adjacentes. Autrement dit, chaque électrode d'une cellule donnée appartient à une plaque bipolaire 4 respective commune à deux cellules adjacentes de l'empilement.

Les deux plaques bipolaires 4 portant les électrodes d'une cellule donnée sont de forme sensiblement plane. Les électrodes sont installées de manière sensiblement parallèle l'une par rapport à l'autre et perpendiculaires à la direction d'empilement XX de la cellule 3. Les deux électrodes sont ici de structures et de compositions identiques.

La membrane PEM 9 est disposée entre les deux électrodes et sensiblement parallèlement aux électrodes.

L'espace entre l'anode 5 et la membrane PEM 9 définit un premier compartiment 11. L'espace entre la cathode 7 et la membrane PEM 9 définit un second compartiment 13. Le premier compartiment 11 et le second compartiment 13 contiennent chacun essentiellement de l'eau. De préférence, de l'eau dé-ionisée est utilisée. Par exemple, l'eau présente une conductivité inférieure à 1µS.cm⁻².

Les parois externes 10 s'étendent sensiblement selon la direction d'empilement XX et délimitent le premier compartiment 11 et le second compartiment 13 perpendiculairement à la direction d'empilement XX. Une première entrée d'eau 51 est ménagée à travers la paroi externe 10 de manière à déboucher dans le premier compartiment 11. Une seconde entrée d'eau 53 est ménagée à travers la paroi externe 10 de manière à déboucher dans le second compartiment 13. Une sortie 55 du premier compartiment 11 est ménagée à travers la paroi externe 10. La sortie 55 du premier compartiment 11 prend la forme d'un passage adapté pour évacuer de l'eau chargée en dioxygène (O₂) sous forme gazeuse. Une sortie 57 du second compartiment 13 est ménagée à travers la paroi externe 10. La sortie 57 du second compartiment 13 prend la forme d'un passage adapté pour évacuer de l'eau chargée en dihydrogène (H₂) sous forme gazeuse.

L'application d'une tension électrique entre l'anode 5 et la cathode 7 alimente les réactions d'électrolyse. Dans le premier compartiment 11, la réaction (1) suivante a lieu :

2H₂O → 4H⁺ + 4e⁻ + O₂ (1)

Les protons (H⁺) issus de la réaction (1) dans le premier compartiment 11 migrent au travers de la membrane PEM 9 jusque dans le second compartiment 13. Dans le second compartiment 13, la réaction (2) suivante a lieu :

4H⁺ + 4e⁻ → 2H₂ (2)

Les réactions (1) et (2) au sein de la pile d'électrolyse 1 sont contrôlées en ajustant le courant continu ou la tension appliquée aux électrodes.

L'anode 5 à l'une des extrémités et la cathode 7 à l'autre extrémité de la pile d'électrolyse 1, sont destinées à être reliées à un générateur de courant continu. Les raccords électriques et la source de courant commune aux cellules 3 de la pile 1 ne sont pas représentés.

La première entrée d'eau 51, la seconde entrée d'eau 53, la sortie 55 de dioxygène (O₂) et la sortie 57 de dihydrogène (H₂) de chaque cellule 3 de la pile 1 peuvent être reliées fluidiquement aux entrées/sorties homologues des autres cellules 3 de la pile 1. Ainsi, les premières entrées d'eau 51 d'une pile 1 sont alimentées par une source d'eau commune, les secondes entrées d'eau 53 d'une pile 1 sont alimentées par une source d'eau commune, les sorties de dioxygène (O₂) d'une pile 1 sont reliées à un collecteur commun et les sorties de dihydrogène (H₂) d'une pile 1 sont reliées à un collecteur commun.

Les secondes entrées d'eau 53 améliorent la régulation thermique et limitent l'assèchement de la membrane PEM 9. En variante, les secondes entrées d'eau 53 du côté de la cathode 7 sont omises.

La figure 2 représente un mode de réalisation d'une cellule 3 telle que représentée en figure 1. La cellule 3 comprend un premier joint 100A, un second joint 100B, deux diffuseurs 15 et deux collecteurs de courant poreux 17.

La membrane PEM 9 est intercalée et pincée, ou prise en sandwich, entre le premier joint 100A et le second joint 100B. L'ensemble premier joint 100A-membrane PEM 9-second joint 100B est lui-même intercalé entre l'anode 5 et la cathode 7. Le premier joint 100A et le second joint 100B sont ici de forme généralement annulaire séparant un espace interne et un espace externe de la cellule 3. Le premier joint 100A et le second joint 100B forment ici les parois externes 10 de la cellule 3. L'intérieur du premier joint 100A correspond au premier compartiment 11 tandis que l'intérieur du second joint 100B correspond au second compartiment 13. Chacun du premier compartiment 11 et du second compartiment 13 loge un diffuseur 15 du côté de l'anode 5, respectivement la cathode 7, et un collecteur de courant poreux 17 du côté de la membrane PEM 9. Les joints 100A et 100B forment en outre des isolants électriques entre l'anode 5, la cathode 7 et la membrane PEM 9.

Dans l'exemple décrit ici, le premier et le second compartiments 11 et 13, respectivement les deux joints 100A, 100B, respectivement les deux diffuseurs 15 et respectivement les deux collecteurs de courant poreux 17 sont identiques. Dans des variantes, les parties homologues de part et d'autre de la membrane PEM 9 présentent des formes et dimensions similaires et des différences mineures.

À l'état assemblé de la cellule 3, la face formant anode 5 de la première plaque bipolaire 4 est en appui contre le premier joint 100A, le premier joint 100A est en appui contre la membrane PEM 9, la membrane PEM 9 est en appui contre le second joint 100B et le second joint 100B est en appui contre la face formant cathode 7 de la seconde plaque bipolaire 4. À l'état serré de la cellule 3, l'anode 5, le premier joint 100A, la membrane PEM 9, le second joint 100B et la cathode 7 sont serrés ensemble selon la direction d'empilement XX. La direction d'empilement XX correspond aussi à une direction de serrage et à une direction d'épaisseur des plaques bipolaires 4, du premier joint 100A, de la membrane PEM 9 et du second joint 100B.

Les dimensions des diffuseurs 15 et des collecteurs de courant poreux 17 sont ajustées de manière à sensiblement remplir leur compartiment 11 ou 13. Le serrage du premier joint 100A entre l'anode 5 et la membrane PEM 9 d'une part, et du second joint 100B entre la cathode 7 et la membrane PEM 9 d'autre part, assure l'étanchéité et les contacts électriques. Le premier compartiment 11 et le second compartiment 13 sont isolés fluidiquement de l'extérieur de la cellule 3.

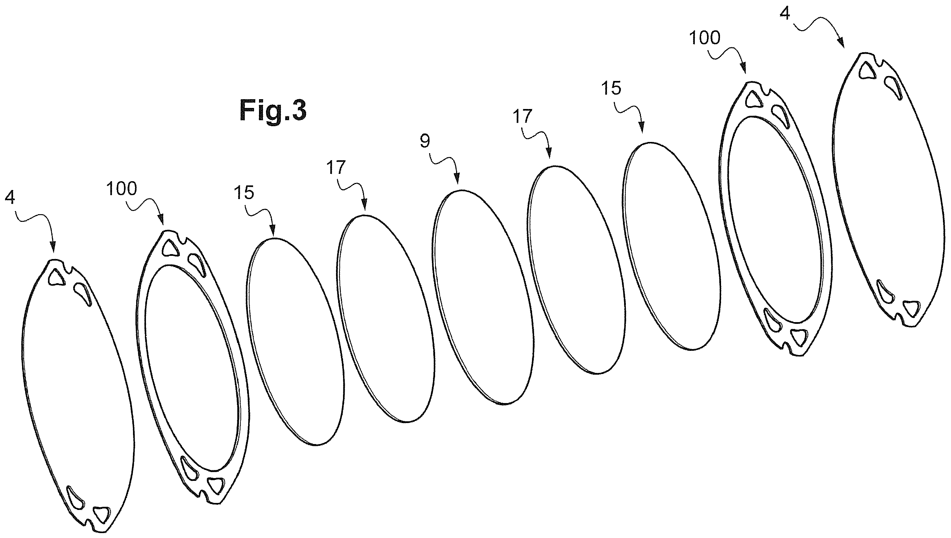

On fait maintenant référence à la figure 3. Dans le mode de réalisation décrit ici, la membrane PEM 9 présente une forme de disque. Son diamètre est ici d'environ 298 millimètres. Son épaisseur est comprise entre environ 0,2 et 0,4 millimètre.

Les plaques bipolaires 4 prennent la forme de plaques planes généralement circulaires. Les plaques bipolaires 4 présentent chacune un bord extérieur correspondant à la forme des joints 100A et 100B. En variante, le bord externe de l'anode 5 et/ou le bord externe de la cathode 7 présentent un connecteur pour une connexion à la source de courant. L'anode 5 et la cathode 7 sont réalisées en un matériau électriquement conducteur, par exemple du titane.

Dans l'exemple décrit ici, les diffuseurs 15 prennent la forme de grilles en forme de disque. En variante, les diffuseurs 15 peuvent prendre d'autres formes adaptées pour homogénéiser la circulation des fluides dans les compartiments 11 et 13. Le diamètre est, ici, d'environ 275 millimètres. L'épaisseur est de 1 millimètre et peut varier entre environ 0,9 et 1,2 millimètres. Les diffuseurs 15 sont réalisés en un matériau électriquement conducteur, par exemple à base de titane. Les diffuseurs 15 prennent ici la forme d'un maillage. Le maillage est agencé pour qu'une circulation de fluide dans la direction du plan principal du diffuseur 15 soit la plus homogène possible en s'étendant dans les directions du plan. Par exemple, les mailles forment un losange de 4,5 sur 2,7 millimètres.

En variante, les diffuseurs 15 peuvent être réalisés au moyen d'un ensemble de canaux ménagés dans l'anode 5 d'une part et dans la cathode 7 d'autre part.

Dans encore une autre variante, le diffuseur 15 est omis du coté de la cathode 7. Cette variante est préférée lorsque les secondes entrées d'eau 53 sont omises et que la circulation d'eau dans le compartiment 13 n'est pas prévue.

Les collecteurs de courant poreux 17 présentent une forme de disque. Leur diamètre est ici d'environ 275 millimètres. L'épaisseur est de 1,5 millimètre et peut varier entre 1,3 et 1,8 millimètre. Les collecteurs de courant poreux 17 sont réalisés en un matériau électriquement conducteur et perméable aux liquides, par exemple du titane fritté.

Les formes et dimensions extérieures des diffuseurs 15 et des collecteurs de courant poreux 17 correspondent aux formes et dimensions intérieures des joints 100A et 100B à l'intérieur desquels les diffuseurs 15 et les collecteurs de courant poreux 17 sont logés. Un jeu de montage est prévu pour permettre des dilatations des diffuseurs 15, des collecteurs de courant poreux 17 et des joints 100A, 100B en cours de fonctionnement. La membrane PEM 9 présente un diamètre supérieur au diamètre intérieur des joints 100A et 100B de manière à pouvoir être enserrée entre le premier joint 100A et le second joint 100B. Les plaques bipolaires 4 présentent quant à elles des formes et dimensions adaptées pour venir s'appuyer contre le premier joint 100A, respectivement le second joint 100B.

Chaque plaque bipolaire 4 appartient à deux cellules 3 adjacentes de l'empilement à l'exception des deux électrodes d'extrémités de l'empilement. Par exemple, la plaque bipolaire 4 au centre de la figure 1 est commune aux deux cellules 3.

L'anode 5, la cathode 7, les deux diffuseurs 15 et les deux collecteurs de courant poreux 17 de la cellule 3 sont en forme générale de disque. Le premier joint 100A et le second joint 100B sont de forme généralement annulaire. Les formes sensiblement axisymétriques facilitent la tenue à la pression ainsi qu'une répartition homogène de l'eau dans les cellules 3. L'homogénéité des réactions au sein de la cellule 3 est bonne. Les formes annulaires et circulaires restent optionnelles. Dans des variantes, la cellule 3 peut présenter une forme générale rectangulaire, carrée ou toute autre forme fermée adaptée, vue selon la direction d'empilement XX. En outre, les dimensions données ci-dessus à titre d'exemple peuvent être différentes en fonction des applications souhaitées.

En variante, la membrane PEM 9 est remplacée par une membrane anionique. Dans ce cas, l'électrolyte est basique au lieu d'être acide. Les anions hydroxydes (HO⁻) traversent la membrane anionique. Les réactions chimiques dans les compartiments sont modifiées mais la structure et le fonctionnement de la pile 1 restent similaires.

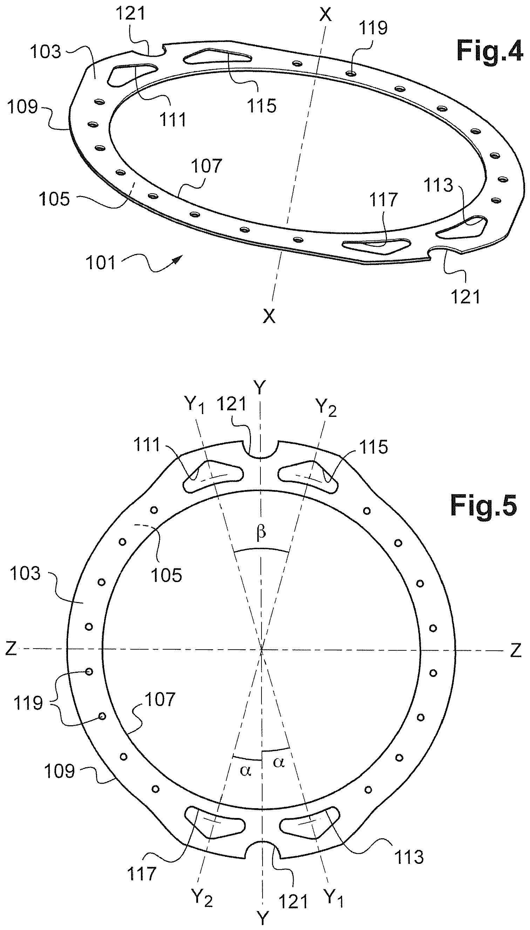

Les figures 4 à 12 représentent un mode de réalisation d'un joint 100, qui peut être utilisé en tant que premier joint 100A et/ou second joint 100B. Le joint 100 comprend une âme 101 et une enveloppe 201 recouvrant au moins en partie l'âme 101.

On fait d'abord référence aux figures 4 et 5 sur lesquelles l'âme 101 est représentée nue, c'est-à-dire dépourvue de l'enveloppe 201. L'âme 101 est de forme généralement annulaire.

L'âme 101 présente deux faces principales 103, 105 opposées l'une par rapport à l'autre et perpendiculaires à une direction d'épaisseur du joint 100. À l'état assemblé du joint 100 dans un empilement, la direction d'épaisseur du joint 100 est parallèle à la direction d'empilement XX.

L'âme 101 est de forme sensiblement plate. L'âme 101 présente un bord interne 107 et un bord externe 109. L'âme 101 présente une forme de couronne : la largeur selon son plan principal perpendiculaire à la direction d'épaisseur est sensiblement supérieure à son épaisseur.

L'âme 101 présente une première ouverture 111, une seconde ouverture 113, une troisième ouverture 115 et une quatrième ouverture 117. Les quatre ouvertures 111, 113, 115, 117 sont traversantes dans la direction d'épaisseur. La première ouverture 111 et la seconde ouverture 113 sont sensiblement opposées diamétralement l'une par rapport à l'autre. La troisième ouverture 115 et la quatrième ouverture 117 sont sensiblement opposées diamétralement l'une par rapport à l'autre. Les quatre ouvertures 111, 113, 115, 117 présentent chacune un contour fermé. En fonctionnement, les quatre ouvertures 111, 113, 115, 117 permettent la circulation d'un fluide entre la première face principale 103 et la seconde face principale 105 au travers de l'âme 101. Ici, les formes des quatre ouvertures 111, 113, 115, 117 sont similaires et présentent chacune un plan de symétrie parallèle à la direction d'épaisseur, et s'étendant selon un diamètre de la forme annulaire de l'âme 101. Les plans de symétrie de la première ouverture 111 et de la seconde ouverture 113 sont communs et référencé Y₁. Les plans de symétrie de la troisième ouverture 115 et de la quatrième ouverture 117 sont communs et référencés Y₂.

Dans le mode de réalisation décrit ici, les quatre ouvertures 111, 113, 115, 117 sont réparties de manière inégale dans la circonférence de l'âme 101. Pour définir leurs positions circonférentielles, on utilise comme référence le centre de chacune des ouvertures 111, 113, 115, 117 dans le plan principal de l'âme 101, appartenant à l'un de leurs plans de symétrie Y₁ et Y₂. La première ouverture 111 et la troisième ouverture 115 sont mutuellement espacées dans la circonférence de l'âme 101 d'un angle β égal à 2α. De même, la seconde ouverture 113 et la quatrième ouverture 117 sont mutuellement espacées dans la circonférence de l'âme 101 de l'angle β égal à 2α. L'âme 101 présente ainsi un premier plan de symétrie Y parallèle à la direction d'épaisseur formant un angle α avec le plan Y₁ d'une part et avec le plan Y₂ d'autre part. α est préférentiellement inférieur à 22,5° et ici sensiblement égal à 15°. L'âme 101 présente un second plan de symétrie Z, parallèle à la direction d'épaisseur et perpendiculaire au plan de symétrie Y. La première ouverture 111 et la troisième ouverture 115 sont rapprochées tandis que la seconde ouverture 113 et la quatrième ouverture 117 sont rapprochées. Cette disposition particulière présente l'avantage de regrouper circonférentiellement les passages pour les fluides dans un état assemblé du joint 100. En disposant la pile d'électrolyse 1 de manière que la direction d'empilement XX soit sensiblement horizontale, les entrées 51 et 53 peuvent être disposées en bas tandis que les sorties 55 et 57 peuvent être disposées en haut. L'évacuation des gaz par les sorties 55 et 57 est facilitée par l'effet de la poussée d'Archimède. Cette disposition reste optionnelle.

Les deux portions circonférentielles de l'âme 101 dans lesquelles sont ménagées la première ouverture 111 et la troisième ouverture 115 d'une part et la seconde ouverture 113 et la quatrième ouverture 117 d'autre part sont appelées "portions d'ouvertures". Les deux portions circonférentielles reliant les deux portions d'ouvertures sont appelées "portions courantes".

Le bord interne 107 est circulaire. Le bord interne 107 présente par exemple un diamètre d'environ 278 millimètres. Les portions de bord externe 109 des portions courantes forment deux arcs de cercle concentriques. Les portions de bord externe 109 des portions courantes s'inscrivent sur un cercle d'environ 340 millimètres de diamètre. La largeur des portions courantes est sensiblement invariante dans la circonférence.

Les portions de bord externe 109 des portions d'ouvertures forment deux arcs de cercle concentriques. Les portions de bord externe 109 des portions d'ouvertures s'inscrivent sur un cercle d'environ 365 millimètres de diamètre. Les portions de bord externe 109 des portions courantes et des portions d'ouvertures sont reliées de manière sensiblement continue. La variation de diamètre externe du bord externe 109 forme une exception au caractère généralement annulaire de l'âme 101.

Les portions de bord externe 109 des portions d'ouvertures présentent chacune une zone de butée 121. Chaque zone de butée 121 prend ici la forme d'une encoche en forme de demi-cercle. Les zones de butée 121 sont disposées diamétralement à l'opposé l'une de l'autre. Les deux zones de butée 121 sont disposées entre la première ouverture 111 et la troisième ouverture 115 d'une part et entre la seconde ouverture 113 et la quatrième ouverture 117 d'autre part. Les zones de butée 121 sont propres à coopérer avec un guide d'une pile 1. Les zones de butée 121 facilitent l'indexation des joints 100 au cours du montage de la pile 1 et améliorent leur maintien par une structure externe au joint 100. En variante, les zones de butée 121 peuvent présenter toute autre forme et/ou agencement dans l'âme 101 en correspondance avec des cales d'une pile. Cette caractéristique reste optionnelle.

Dans l'exemple représenté ici, l'âme 101 présente en outre des trous traversants 119 répartis de manière sensiblement régulière dans la circonférence des portions courantes de l'âme 101. Les trous 119 améliorent l'accrochage de l'enveloppe 121 autour de l'âme 101 et facilitent la fabrication du joint 100.

L'épaisseur de l'âme 101 est sensiblement invariante et comprise entre 0,5 et 2 millimètres, par exemple environ 0,8 millimètre. L'âme 101 est réalisée à base de métal, par exemple de l'acier inoxydable. En variante, les formes, dimensions et compositions de l'âme 101 pourront être différentes et présenter des propriétés de tenue mécanique équivalentes.

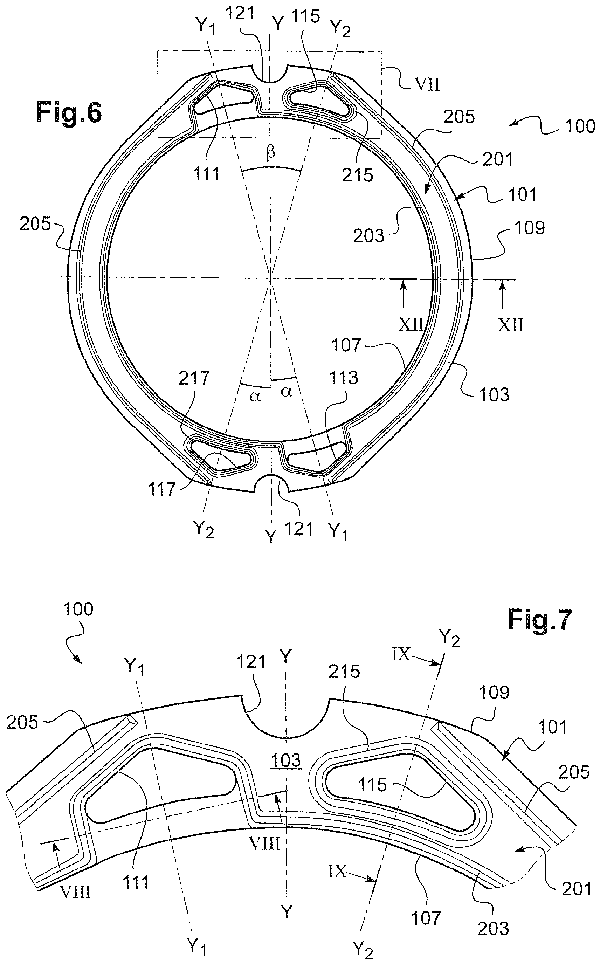

On fait maintenant référence aux figures 6 et 7 représentant le joint 100 prêt à être assemblé en une pile 1. Le joint 100 comprend l'âme 101 recouverte partiellement de l'enveloppe 201. L'enveloppe 201 est adhérisée sur l'âme 101. Dans l'exemple décrit ici, le joint 100 est obtenu par injection du matériau constituant l'enveloppe 201 au contact de l'âme 101. L'enveloppe 201 présente, ici, une composition à base d'éthylène-propylène-diène monomère (EPDM). La composition de l'enveloppe 201 présente une élasticité supérieure à celle de la composition de l'âme 101. L'EPDM utilisé ici permet d'obtenir des propriétés mécaniques, et en particulier une tenue à des températures extrêmes, améliorées par rapport à d'autres élastomères. L'utilisation d'EPDM plutôt que d'autres élastomères reste optionnelle. Par exemple, des fluoropolymères (FKM), des éthylènes-acétate de vinyle (EVA et EVM) et des polyéthylènes chlorés (CM) peuvent être utilisés en fonction des applications souhaitées.

L'enveloppe 201 recouvre, ici en partie seulement, la première face principale 103 et la seconde face principale 105 de l'âme 101. Les ouvertures traversantes 111, 113, 115, 117 sont laissées libres. La circulation d'un fluide d'une face vers l'autre selon la direction d'épaisseur est ainsi possible. Les trous 119 sont remplis par l'enveloppe 201.

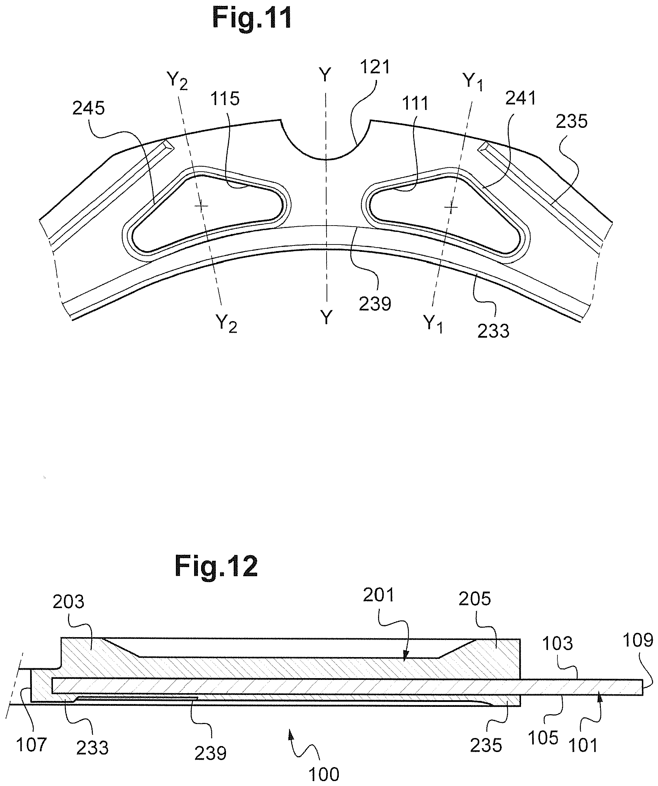

Sur la figure 6, les seules parties de l'âme 101 visibles sont des portions diamétralement extérieures des portions courantes, à droite et à gauche de la figure. Comme cela est mieux visible en figure 12, l'enveloppe 201 recouvre également le bord interne 107. Le bord externe 109 est laissé libre.

L'enveloppe 201 présente une première nervure interne 203. La nervure interne 203 s'étend de manière continue sur la première face 103. La nervure interne 203 s'étend selon un contour enfermant le bord interne 107, la première ouverture 111 et la seconde ouverture 113. Autrement dit, le bord interne 107, la première ouverture 111 et la seconde ouverture 113 sont cernés par la nervure interne 203.

Dans l'exemple représenté ici, le contour fermé de la nervure interne 203 correspond à la forme du bord interne 107 et aux formes des première et seconde ouvertures 111 et 113. La nervure interne 203 suit le bord interne 107 et une partie des contours des première et seconde ouvertures 111 et 113. Le positionnement de la nervure interne 203 à proximité du bord interne 107 et des première et seconde ouvertures 111 et 113 limite les phénomènes de cavitation et les écoulements non laminaires dans les cellules 3 à l'état assemblé et en fonctionnement des joints 100. En variante, la nervure interne 203 suit un tracé à distance du bord interne 107 et/ou des première et seconde ouvertures 111 et 113, en particulier lorsque le caractère laminaire des écoulements n'est pas considéré comme un paramètre critique.

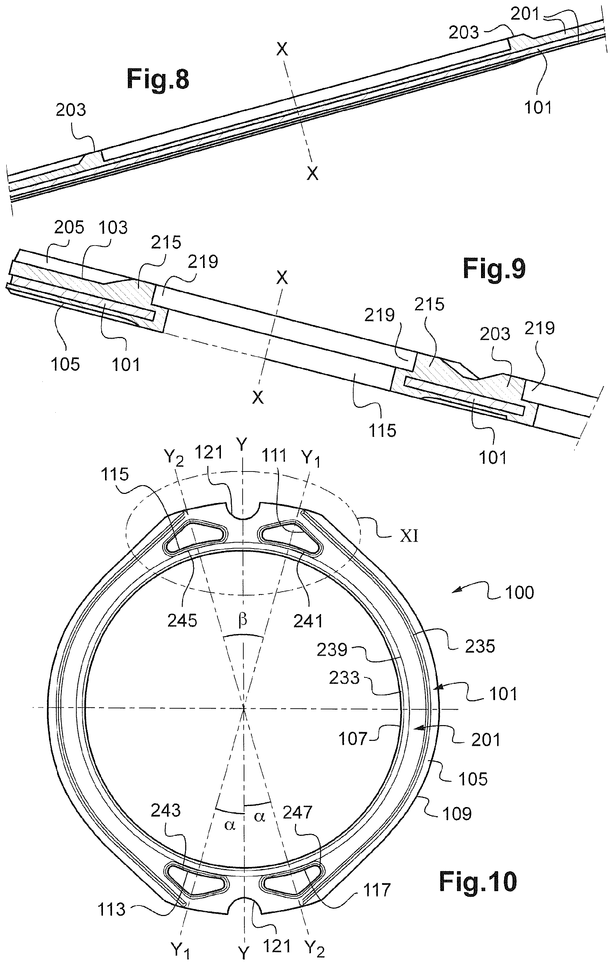

Comme cela est mieux visible en figure 8, un premier passage est préservé sensiblement selon une direction radiale entre l'espace intérieur du joint 100 et la première ouverture 111. Un second passage est préservé sensiblement selon une direction radiale entre l'espace intérieur du joint 100 et la seconde ouverture 113. Les deux passages sont délimités circonférentiellement par des portions de la nervure interne 203. Du fluide peut circuler selon une direction sensiblement radiale entre la première ouverture 111 et l'espace libre au centre du joint 100, ainsi qu'entre la seconde ouverture 113 et l'espace libre au centre du joint 100. Dans un état assemblé du joint 100, chacun de ces passages définit l'une des entrées/sorties 51, 53, 55, 57 de l'un parmi le premier compartiment 11 et le second compartiment 13.

Dans l'exemple représenté ici, l'enveloppe 201 recouvre les parties de la première face 103 de l'âme 101 situées entre la première ouverture 111 et la portion du bord interne 107 voisine d'une part et entre la seconde ouverture 113 et la portion du bord interne 107 voisine d'autre part. Cela permet d'isoler électriquement l'âme 101 des autres pièces de la cellule 3 et notamment des diffuseurs 15 et des collecteurs de courant poreux 17. La dégradation chimique de l'âme 101 par les fluides de la cellule 3 est en outre limitée. Comme cela est visible en figure 8, la partie de l'enveloppe 201 recouvrant l'âme 101 entre l'espace intérieur du joint 100 et la première ouverture 111, respectivement la seconde ouverture 113, présente une épaisseur inférieure à celle du reste de l'enveloppe 201 recouvrant la première face 103. Les premier et second passages présentent ainsi une section de passage importante. Cette caractéristique est optionnelle : l'épaisseur de l'enveloppe 201 peut être uniforme dans tout le joint 100 (à l'exception des nervures).

L'enveloppe 201 présente une seconde nervure externe 205. La nervure externe 205 s'étend sur la première face principale 103. La nervure externe 205 s'étend sensiblement le long du contour externe 109. La nervure externe 205 fait saillie de la première face principale 103 entre la nervure interne 203 et le bord externe 109. Dans l'exemple décrit ici, la nervure externe 205 comprend deux portions distinctes. La nervure externe 205 est interrompue au niveau des portions d'ouvertures. Autrement dit, les portions du joint 100 entre la première ouverture 111 et la troisième ouverture 115 d'une part et entre la seconde ouverture 113 et la quatrième ouverture 117 d'autre part, sont dépourvues de la nervure externe 205. Les deux portions de la nervure externe 205 peuvent aussi être vues comme deux nervures en tant que telles.

La nervure externe 205 améliore la stabilité mécanique du joint 100 à l'état installé et comprimé au sein d'une pile 1 en formant une zone d'appui. En outre, la seconde nervure 205 forme une seconde barrière étanche dans les portions courantes en complément de la première barrière étanche formée par la nervure interne 203 à l'état installé et comprimé du joint 100. La nervure externe 205 facilite l'assemblage de la pile 1 et améliore la tenue du joint 100 à l'état compressé. La nervure externe 205 reste optionnelle.

La discontinuité de la nervure externe 205 facilite l'équilibrage des pressions entre l'espace du côté interne et l'espace du côté externe de la nervure externe 205 dans un état comprimé du joint 100. Un "effet de ventouse" est évité. En outre, en cas d'échappement accidentel de gaz et/ou de liquide du côté externe de la nervure interne 203, les fluides sont guidés par la nervure externe 205 vers des zones préalablement identifiées, ici les portions d'ouvertures. Ainsi, la détection et/ou la récupération des fluides échappés sont facilitées. La discontinuité de la nervure externe 205 reste optionnelle. En variante, des perçages peuvent être ménagés entre la nervure interne 203 et la nervure externe 205 et selon la direction d'épaisseur XX pour faciliter la récupération de fluides échappés en cas d'étanchéité défectueuse de la nervure interne 203.

Dans le mode de réalisation décrit ici, l'enveloppe 201 présente deux nervures supplémentaires dites d'ouverture 215 et 217. Les nervures d'ouverture 215 et 217 s'étendent sur la première face principale 103. Chacune des deux nervures d'ouverture 215 et 217 s'étend de manière continue selon un contour fermé entourant la troisième ouverture 115, respectivement la quatrième ouverture 117. L'espace intérieur de la troisième ouverture 115, respectivement de la quatrième ouverture 117, est isolé hermétiquement de l'espace situé entre la nervure interne 203 et la nervure externe 205 dans un état installé et comprimé du joint 100 dans une pile 1. Autrement dit, du fluide peut circuler sensiblement selon la direction d'empilement XX dans la troisième ouverture 115, respectivement dans la quatrième ouverture 117, tout en y restant confiné selon le plan de la figure 6. D'autre part, le joint 100 est dépourvu de passage selon la direction radiale entre l'intérieur de la troisième ouverture 115 et l'espace intérieur du bord interne 107, respectivement entre l'intérieur de la quatrième ouverture 117 et l'espace intérieur du bord interne 107.

On fait maintenant référence aux figures 8, 9 et 12. La nervure interne 203 présente une section transversale sensiblement invariante tout au long de la circonférence du joint 100, y compris autour de la première ouverture 111 et de la seconde ouverture 113. La nervure interne 203 présente ici une section transversale asymétrique. Ladite section transversale assure de maîtriser la déformation de la nervure interne 203 sous l'effet d'un écrasement selon la direction d'épaisseur. Dans l'exemple décrit ici, la section transversale présente un côté orienté vers l'intérieur du joint 100 sensiblement droit et perpendiculaire à la première face principale 103. La section transversale présente un côté opposé, c'est-à-dire orienté vers l'extérieur du joint 100, incliné. Le côté incliné est orienté sensiblement à 45° par rapport à la première face principale 103. Le côté perpendiculaire et le côté incliné sont raccordés par une surface d'extrémité, c'est-à-dire orientée vers l'opposé de l'âme 101, sensiblement plane et parallèle à la première face principale 103. La section transversale asymétrique présente ainsi une forme générale de trapèze. La section transversale étant asymétrique, le trapèze est non isocèle. Le côté interne étant perpendiculaire à la première face principale 103 et à la surface d'extrémité, le trapèze est en outre un trapèze rectangle. La nervure interne 203 peut en variante présenter une forme asymétrique différente d'un trapèze. L'asymétrie de la section transversale de la nervure interne 203 reste une caractéristique optionnelle.

La nervure interne 203 fait saillie dans la direction d'épaisseur d'une valeur comprise entre 0,5 et 1,5 millimètre à l'état non comprimé, par exemple environ 1 millimètre.

La nervure externe 205 et les nervures d'ouverture 215 et 217 présentent des sections transversales sensiblement invariantes et similaires à celles de la nervure interne 203. Le côté perpendiculaire de la forme de trapèze de la nervure externe 205 est orienté du côté du bord externe 109 du joint 100, tandis que le côté incliné est orienté du côté du bord interne 107. Le côté perpendiculaire des nervures d'ouverture 215, respectivement 217, est orienté du côté de la troisième ouverture 115, respectivement de la quatrième ouverture 117. Le côté incliné des nervures d'ouverture 215, respectivement 217, est orienté vers l'extérieur de la troisième ouverture 115, respectivement de la quatrième ouverture 117. Les formes des sections transversales des différentes nervures 203, 205, 215, 217, assurent de maîtriser l'expansion desdites nervures.

Notamment, sous l'effet d'une compression selon la direction d'épaisseur :
- le côté perpendiculaire de la nervure interne 203 tend à se déformer en un bourrelet arrondi faisant saillie vers le centre du joint 100 tandis qu'une partie du côté incliné vient au contact de l'anode 5 ou la cathode 7 voisine en augmentant progressivement les zones de contact et d'étanchéité avec l'augmentation de la compression,
- le côté perpendiculaire de la nervure externe 205 tend à se déformer en un bourrelet arrondi faisant saillie vers l'extérieur du joint 100 tandis qu'une partie du côté incliné vient au contact de l'anode 5 ou la cathode 7 voisine en augmentant progressivement les zones de contact et d'étanchéité avec l'augmentation de la compression, et
- chacun des côtés perpendiculaires des nervures d'ouverture 215, 217 tend à se déformer en un bourrelet arrondi faisant saillie vers l'intérieur de l'ouverture 215, respectivement 217, tandis qu'une partie du côté incliné vient au contact de l'anode 5 ou de la cathode 7 voisine en augmentant progressivement les zones de contact et d'étanchéité avec l'augmentation de la compression.

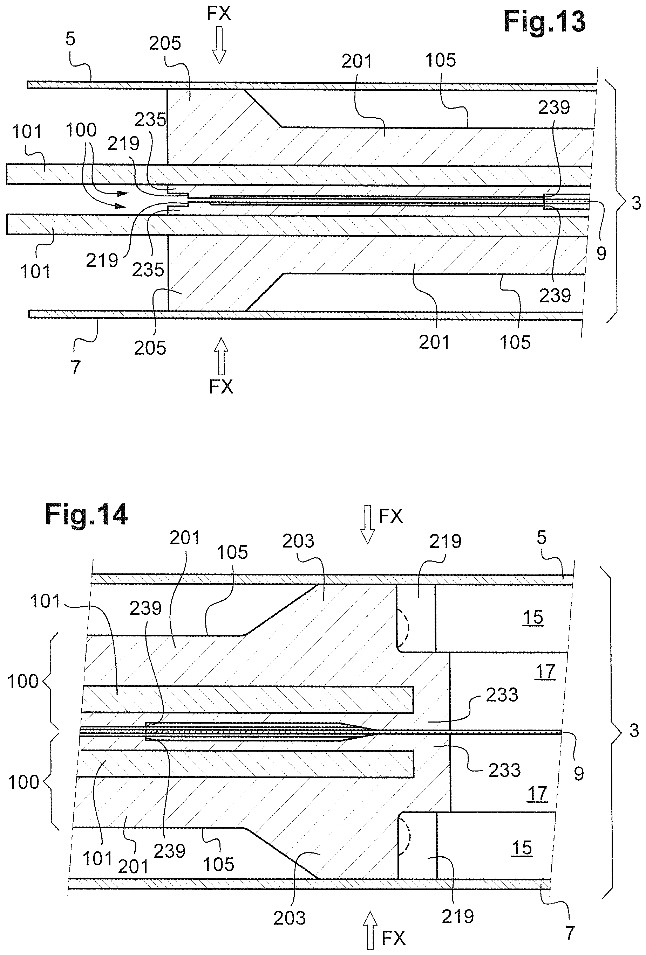

Comme cela est visible en figures 9 et 14 notamment, les côtés perpendiculaires des nervures 203, 215, 217 sont agencés de manière à former des retraits 219 de la matière de l'enveloppe 201. Autrement dit, le côté perpendiculaire desdites nervures 203, 215, 217 est en retrait par rapport aux bords intérieurs des ouvertures 111, 113, 115, 117 de manière à permettre l'expansion en bourrelet sans réduire les sections de passage desdites ouvertures 111, 113, 115, 117. De même, le côté perpendiculaire de la nervure interne 203 est agencé de manière à former un retrait 219 par rapport au bord interne 107. Les retraits 219 confèrent aux joints 100 une tolérance à la variation de côte et à la dilatation des diffuseurs 15 et des joints 100 en fonctionnement. Les joints 100 et les diffuseurs 15 sont mutuellement ajustés de sorte que le bourrelet vienne au contact du diffuseur 15 sans le déformer lors de la compression. Le diffuseur 15 est alors calé par le bourrelet.

Ainsi, l'expansion en bourrelet desdites nervures 203, 215, 217 dans le plan perpendiculaire à la direction d'épaisseur n'entrave pas le passage de fluide dans les ouvertures 111, 113, 115, 117 et préserve l'intégrité du premier compartiment 11 et du second compartiment 13. Bien qu'avantageuse, les retraits 119 restent optionnels.

On fait maintenant référence aux figures 10 et 11 vue du côté de la seconde face principale 105. Dans l'exemple représenté ici, l'enveloppe 201 recouvre partiellement la seconde face principale 105 de l'âme 101. La partie de l'enveloppe 201 recouvrant partiellement la seconde face 105 est similaire à celle du côté de la première face principale 103 tout en présentant les différences suivantes :
- La nervure interne, référencée ici 233, s'étend le long du bord interne 107 sur toute la circonférence du joint 100 sans être disposée autour de la première ouverture 111 et de la seconde ouverture 113. Du côté de la seconde face 105, le joint 100 est dépourvu de passage radial entre l'espace intérieur du joint 100 et la première ouverture 111, respectivement la seconde ouverture 113.
- La nervure externe est ici référencée 235.
- Une nervure d'ouverture 241 enferme la première ouverture 111 et une nervure d'ouverture 243 enferme la seconde ouverture 113.
- La nervure d'ouverture enfermant la troisième ouverture 115, respectivement la quatrième ouverture 117, est ici référencée 245, respectivement 247.
- Les formes et dimensions des sections des nervures 231, 233, 241, 243, 245, 247 du côté de la seconde face principale 105 sont différentes de celles du côté de la première face principale 103. En particulier, les dimensions desdites nervures 231, 233, 241, 243, 245, 247 du côté de la seconde face principale 105, selon la direction d'épaisseur, sont sensiblement inférieures à leurs homologues du côté de la première face principale 103. Ici, les nervures 231, 233, 241, 243, 245, 247 font saillie dans la direction d'empilement d'environ 0,2 millimètre. Les nervures 231, 233, 241, 243, 245, 247 sont conformées de manière à se déformer essentiellement dans la direction d'épaisseur XX en réponse à un écrasement selon la direction d'épaisseur XX. Notamment, la déformation de la nervure interne 233 dans le plan principal du joint 100 est nulle ou négligeable. Ainsi, à l'état assemblé dans une pile 1 et au contact de la membrane PEM 9, la déformation de la nervure interne 233 génère pas ou peu de traction de la membrane PEM 9. L'intégrité de la membrane PEM 9 est préservée.

On fait maintenant référence aux figures 13 et 14 représentant deux joints 100 à l'état assemblé dans un empilement mais non comprimés. La figure 14 représente une partie du côté interne de l'assemblage selon le même plan de coupe que celui de la figure 13. L'assemblage représenté forme une cellule 3. Un premier joint 100 (en haut sur les figures 13 et 14) est mis en regard d'un second joint 100 (en bas sur les figures 13 et 14) de manière que leurs secondes faces principales 105 respectives soient en regard l'une de l'autre. Une membrane PEM 9 est coincée dans la direction d'empilement XX entre les deux joints 100. Une anode 5 est disposée contre le premier joint 100 (en haut sur les figures 13 et 14) et une cathode 7 est disposée contre le deuxième joint 100 (en bas sur les figures 13 et 14). La coupe représentée est issue d'une portion courante de l'assemblage, à distance des ouvertures traversantes 111, 113, 115, 117. En ces sections courantes, le montage présente une symétrie selon un plan correspondant sensiblement au plan de la membrane PEM 9.

Sur les figures, les joints 100 sont montrés en un état non contraint. Les flèches référencées FX représentent les directions d'application des forces de compression s'appliquant sur la cellule 3 selon la direction d'empilement XX dans un état comprimé.

Un épaulement 239 est ménagé le long de la circonférence dans la seconde face principale 107 de l'enveloppe 201 de chacun des joints 100. L'épaulement est orienté vers l'intérieur des joints 100. L'épaulement 239 s'inscrit sensiblement sur un cercle, qui présente ici un diamètre d'environ 293 millimètres. L'épaulement 239 est positionné radialement entre la nervure interne 233 d'une part et les ouvertures traversantes 111, 113, 115 et 117 d'autre part. L'épaulement 239 forme une butée, ou au moins un repère, facilitant le positionnement de la membrane PEM 9 entre les deux joints 100 lors du montage. L'épaulement 239 reste optionnel.

Les côtés perpendiculaires des nervures 203, 205 dans la forme comprimée et déformée en bourrelet faisant saillie radialement sont représentés en trait tireté.

L'assemblage des joints 100 dans la pile 1 ne nécessite l'adjonction d'aucune autre pièce d'étanchéité : le contact du joint 100 contre les autres parties de la pile 1 forme l'étanchéité. Lors du serrage, l'homogénéité des contraintes est améliorée par rapport à un système comprenant une pièce rigide en appui sur une pièce à haute déformabilité. Les phénomènes de glissement, les frottements et les détériorations qui pourraient en résulter sont évitées. En outre les seuils de forces de serrages nécessaires pour assurer l'étanchéité sont inférieurs à ceux des systèmes existants.

Des essais sur les joints représentés sur les figures ont été menés par la demanderesse. Des piles comprenant au moins 100 cellules, voire au moins 150, 200 ou même 300 cellules résistent à des pressions d'environ 45 bars, c'est-à-dire environ une fois et demi la pression de service prévue (30 bars), et ce sous un serrage selon la direction d'empilement XX d'environ 2 000 à 5 000 daN.

L'invention ne se limite pas aux exemples de joints, de cellules et de piles décrits ci-avant, seulement à titre d'exemples, mais elle englobe toutes les variantes que pourra envisager l'homme de l'art dans le cadre des revendications ci-après. Notamment, les exemples de dimensions nominales pourront être adaptés en fonction des applications prévues.

## Revendications

1. Cellule électrochimique (3) comprenant deux joints (100A, 100B) pour une pile d'électrolyseur, chaque joint comprenant :
- une âme (101) généralement annulaire, présentant deux faces (103, 105) mutuellement opposées selon une direction d'épaisseur (XX) et au moins deux ouvertures (111, 113) traversantes dans la direction d'épaisseur (XX) qui sont sensiblement opposées diamétralement l'une par rapport à l'autre, et
- une enveloppe (201) recouvrant au moins en partie les deux faces (103, 105) en laissant les deux ouvertures (111, 113) au moins partiellement libres,
et présentant au moins une première nervure (203) s'étendant sur une première (103) des deux faces (103, 105) selon un contour enfermant un bord interne (107) de l'âme (201) et les deux ouvertures (111, 113) de manière à permettre la circulation d'un fluide entre les deux faces (103, 105) selon la direction d'épaisseur (XX),
les deux j oints (100A, 100B) étant mutuellement disposés de manière que la seconde (105) des deux faces (103, 105) des deux joints (100A, 100B) soient en vis-à-vis.

2. Cellule électrochimique (3) selon la revendication 1, dans lequel l'enveloppe (201) présente une configuration et une composition adaptées de manière à isoler électriquement deux organes respectivement en contact avec l'une et l'autre des deux faces (103, 105).

3. Cellule électrochimique (3) selon l'une des revendications 1 et 2, dans lequel l'âme (101) présente une composition métallique et dans lequel l'enveloppe (201) présente une composition à base d'élastomère.

4. Cellule électrochimique (3) selon la revendication 3, dans lequel l'enveloppe (201) présente une composition comprenant de l'éthylène-propylène-diène monomère (EPDM).

5. Cellule électrochimique (3) selon l'une des revendications précédentes, dans lequel l'enveloppe (201) est adhérisée sur l'âme (101).

6. Cellule électrochimique (3) selon l'une des revendications précédentes, dans lequel l'enveloppe (201) présente en outre au moins une seconde nervure (205) faisant saillie de la première face (103) et s'étendant entre la première nervure (203) et un bord externe (109) de l'âme (101).

7. Cellule électrochimique (3) selon la revendication 6, dans lequel la seconde nervure (205) s'étend selon un contour ouvert entourant partiellement la première nervure (203).

8. Cellule électrochimique (3) selon l'une des revendications précédentes, dans lequel l'âme (101) comprend en outre deux ouvertures supplémentaires (115, 117) traversantes dans la direction d'épaisseur (XX) et sensiblement opposées diamétralement l'une par rapport à l'autre,
l'enveloppe (201) laissant les deux ouvertures supplémentaires (115, 117) au moins partiellement libres, l'enveloppe (201) présentant en outre deux nervures supplémentaires (215, 217) s'étendant sur la première face (103) selon un contour enfermant chacune des deux ouvertures supplémentaires (115 ; 117) respectivement.

9. Cellule électrochimique (3) selon la revendication 8, dans lequel l'une des deux ouvertures (111 ; 113) et l'une des deux ouvertures supplémentaires (115 ; 117) sont proches l'une de l'autre.

10. Cellule électrochimique (3) selon l'une des revendications précédentes, dans lequel au moins une nervure (203, 205, 215, 217) présente une section transversale asymétrique de manière qu'un écrasement de ladite nervure (203, 205, 215, 217) selon la direction d'épaisseur (XX) génère une déformation asymétrique de ladite nervure (203, 205, 215, 217).

11. Cellule électrochimique (3) selon la revendication 10, dans lequel la section transversale présente une forme généralement trapézoïdale.

12. Cellule électrochimique (3) selon l'une des revendications précédentes, dans lequel l'enveloppe (201) présente une nervure (233) s'étendant sur la seconde des deux faces (105) selon un contour enfermant le bord interne (107), laquelle nervure (233) est conformée de sorte que la nervure (233) se déforme essentiellement dans la direction d'épaisseur (XX) en réponse à un écrasement selon la direction d'épaisseur (XX).

13. Cellule électrochimique (3) selon l'une des revendications précédentes, dans lequel un bord externe (109) de l'âme (101) présente au moins une zone de butée (121) propre à coopérer avec un guide d'une pile d'électrolyseur (1) pour caler le joint (100) dans ladite pile d'électrolyseur (1) selon une direction perpendiculaire à la direction d'épaisseur (XX).

14. Pile (1) d'électrolyseur comprenant un empilement de cellules électrochimiques (3) selon l'une des revendications précédentes.

## Patentansprüche

1. Elektrochemische Zelle (3), die zwei Dichtungen (100A, 100B) für eine Elektrolyseurzelle umfasst, wobei jede Dichtung umfasst:
- einen allgemein ringförmigen Kern (101), der zwei gemäß einer Dickenrichtung (XX) gegenseitig gegenüberliegende Flächen (103, 105) und mindestens zwei in der Dickenrichtung (XX) durchgängige Öffnungen (111, 113) aufweist, die im wesentlichen diametral entgegengesetzt sind, und
- einen Mantel (201), der die zwei Flächen (103, 105) mindestens teilweise bedeckt, indem er die zwei Öffnungen (111, 113) mindestens teilweise frei lässt,
und mindestens eine erste Rippe (203) aufweist, die sich auf einer ersten (103) der zwei Flächen (103, 105) gemäß einer Kontur erstreckt, die einen inneren Rand (107) des Kerns (201) und die zwei Öffnungen (111, 113) derart einschließt, dass die Zirkulation eines Fluids zwischen den zwei Flächen (103, 105) gemäß der Dickenrichtung (XX) gestattet ist,
wobei die zwei Dichtungen (100A, 100B) derart gegenseitig angeordnet sind, dass die zweite (105) der zwei Flächen (103, 105) der zwei Dichtungen (100A, 100B) gegenüberliegend sind.

2. Elektrochemische Zelle (3) nach Anspruch 1, wobei der Mantel (201) eine Konfiguration und eine Zusammensetzung aufweist, die derart angepasst sind, dass zwei Organe, die jeweils im Kontakt mit der einen und der anderen der zwei Flächen (103, 105) sind, elektrisch isoliert werden.

3. Elektrochemische Zelle (3) nach einem der Ansprüche 1 und 2, wobei der Kern (101) eine metallische Zusammensetzung aufweist und wobei der Mantel (201) eine Zusammensetzung auf der Basis von Elastomer aufweist.

4. Elektrochemische Zelle (3) nach Anspruch 3, wobei der Mantel (201) eine Zusammensetzung aufweist, die Ethylen-Propylen-Dien-Monomer (EPDM) umfasst.

5. Elektrochemische Zelle (3) nach einem der vorangehenden Ansprüche, wobei der Mantel (201) auf dem Kern (101) haftet.

6. Elektrochemische Zelle (3) nach einem der vorangehenden Ansprüche, wobei der Mantel (201) ferner mindestens eine zweite Rippe (205) aufweist, die von der ersten Fläche (103) absteht und sich zwischen der ersten Rippe (203) und einem äußeren Rand (109) des Kerns (101) erstreckt.

7. Elektrochemische Zelle (3) nach Anspruch 6, wobei sich die zweite Rippe (205) gemäß einer offenen Kontur erstreckt, die die erste Rippe (203) teilweise umgibt.

8. Elektrochemische Zelle (3) nach einem der vorangehenden Ansprüche, wobei der Kern (101) ferner zwei zusätzliche in der Dickenrichtung (XX) durchgängige und im wesentlichen diametral entgegengesetzte Öffnungen (115, 117) umfasst,
wobei der Mantel (201) die zwei zusätzlichen Öffnungen (115, 117) mindestens teilweise frei lässt, wobei der Mantel (201) ferner zwei zusätzliche Rippen (215, 217) aufweist, die sich auf der ersten Fläche (103) gemäß einer Kontur erstrecken, die jeweils jede der zwei zusätzlichen Öffnungen (115; 117) einschließt.

9. Elektrochemische Zelle (3) nach Anspruch 8, wobei die eine der zwei Öffnungen (111; 113) und die andere der zwei zusätzlichen Öffnungen (115; 117) einander nah sind.

10. Elektrochemische Zelle (3) nach einem der vorangehenden Ansprüche, wobei mindestens eine Rippe (203, 205, 215, 217) einen asymmetrischen Querschnitt derart aufweist, dass eine Quetschung der Rippe (203, 205, 215, 217) gemäß der Dickenrichtung (XX) eine asymmetrische Verformung der Rippe (203, 205, 215, 217) erzeugt.

11. Elektrochemische Zelle (3) nach Anspruch 10, wobei der Querschnitt eine allgemein Trapezform aufweist.

12. Elektrochemische Zelle (3) nach einem der vorangehenden Ansprüche, wobei der Mantel (201) eine Rippe (233) aufweist, die sich auf der zweiten der zwei Flächen (105) gemäß einer Kontur erstreckt, die den inneren Rand (107) einschließt, wobei die Rippe (233) derart ausgebildet ist, dass sich die Rippe (233) im Wesentlichen in der Dickenrichtung (XX) als Antwort auf eine Quetschung gemäß der Dickenrichtung (XX) verformt.

13. Elektrochemische Zelle (3) nach einem der vorangehenden Ansprüche, wobei ein äußerer Rand (109) des Kerns (101) mindestens eine Anschlagzone (121) aufweist, die geeignet ist, mit einer Führung einer Elektrolyseurzelle (1) zusammenzuwirken, um die Dichtung (100) in der Elektrolyseurzelle (1) gemäß einer Richtung senkrecht zur Dickenrichtung (XX) zu verkeilen.

14. Elektrolyseurzelle (1), umfassend einen Stapel elektrochemischer Zellen (3) nach einem der vorangehenden Ansprüche.

## Claims

1. Electrochemical cell (3) comprising two seals (100A, 100B) for an electrolyzer battery, each seal comprising:
- a generally annular core (101) having two faces (103, 105) that are mutually opposite in a thickness direction (XX), and at least two through-apertures (111, 113) extending in the thickness direction (XX) and which are substantially radially opposite each other; and
- an envelope (201) at least partially covering the two faces (103, 105) while leaving the two apertures (111, 113) at least partially free,
and comprising at least one first rib (203) extending, over a first (103) of the two faces (103, 105), along a contour enclosing an internal edge (107) of the core (201) and the two apertures (111, 113) so as to allow a fluid to flow between the two faces (103, 105) in the thickness direction (XX),
- the two seals (100A, 100B) being mutually placed so that the second (105) of the two faces (103, 105) of the two seals (100A, 100B) are mutually facing.

2. The electrochemical cell (3) as claimed in claim 1, in which the envelope (201) has a configuration and a composition that are adapted so as to electrically insulate two members making contact with one and the other of the two faces (103, 105), respectively.

3. The electrochemical cell (3) as claimed in one of claims 1 and 2, in which the core (101) has a metallic composition and in which the envelope (201) has an elastomer-based composition.

4. The electrochemical cell (3) as claimed in claim 3, in which the envelope (201) has a composition comprising ethylene-propylene-diene monomer (EPDM).

5. The electrochemical cell (3) as claimed in one of the preceding claims, in which the envelope (201) adheres to the core (101).

6. The electrochemical cell (3) as claimed in one of the preceding claims, in which the envelope (201) furthermore has at least one second rib (205) protruding from the first face (103) and extending between the first rib (203) and an external edge (109) of the core (101).

7. The electrochemical cell (3) as claimed in claim 6, in which the second rib (205) extends along an open contour partially encircling the first rib (203).

8. The electrochemical cell (3) as claimed in one of the preceding claims, in which the core (101) furthermore comprises two additional through-apertures (115, 117) that extend in the thickness direction (XX) and that are substantially radially opposite each other,
the envelope (201) leaving the two additional apertures (115, 117) at least partially free, the envelope (201) furthermore comprising two additional ribs (215, 217) extending, over the first face (103), along a contour enclosing each of the two additional apertures (115; 117), respectively.

9. The electrochemical cell (3) as claimed in claim 8, in which one of the two apertures (111; 113) and one of the two additional apertures (115; 117) are close to each other.

10. The electrochemical cell (3) as claimed in one of the preceding claims, in which at least one rib (203, 205, 215, 217) has an asymmetric cross section so that crushing said rib (203, 205, 215, 217) in the thickness direction (XX) generates an asymmetric deformation of said rib (203, 205, 215, 217).

11. The electrochemical cell (3) as claimed in claim 10, in which the cross section has a generally trapezium shape.

12. The electrochemical cell (3) as claimed in one of the preceding claims, in which the envelope (201) has a rib (233) extending, over the second of the two faces (105), along a contour enclosing the internal edge (107), which rib (233) is shaped so that the rib (233) deforms essentially in the thickness direction (XX) in response to crushing in the thickness direction (XX).

13. The electrochemical cell (3) as claimed in one of the preceding claims, in which an external edge (109) of the core (101) has at least one abutment zone (121) able to interact with a guide of an electrolyzer battery (1) in order to immobilize The electrochemical cell (3) in said electrolyzer battery (1) in a direction perpendicular to the thickness direction (XX).

14. An electrolyzer battery (1) comprising a stack of electrochemical cells (3) as claimed in one of the preceding claims.
